Europäisches Patentamt

European Patent Office

Office européen des brevets

(11) Publication number: **0 185 845 B1**

# EUROPEAN PATENT SPECIFICATION

(45) Date of publication of patent specification: **11.03.92**  (51) Int. Cl.⁵: **G06F 3/023**, G06F 3/037

(21) Application number: **85110390.3**

(22) Date of filing: **20.08.85**

(54) **HELP placement on a screen for a computer user.**

(30) Priority: **31.10.84 US 666794**

(43) Date of publication of application:
**02.07.86 Bulletin  86/27**

(45) Publication of the grant of the patent:
**11.03.92 Bulletin  92/11**

(84) Designated Contracting States:
**DE FR GB IT**

(56) References cited:
**EP-A- 0 118 187**
**EP-A- 0 171 663**

**PATENT ABSTRACTS OF JAPAN, vol. 8, no.
14 (P-249)[1451], 21st January 1984; & JP - A -
58 175 009 (TOKYO SHIBAURA DENKI K.K.)
14-10-1983**

(73) Proprietor: **International Business Machines
Corporation
Old Orchard Road
Armonk, N.Y. 10504(US)**

(72) Inventor: **Berry, Richard Edmond
4209 Val Verde Drive
Georgetown Texas 78626(US)**
Inventor: **Johnson, Steven Eldridge
11900 Brookwood Circle
Austin Texas 78750(US)**
Inventor: **Ruiz, Thomas Michael
7407 Attar Cove
Austin Texas 78759(US)**

(74) Representative: **Colas, Alain
Compagnie IBM France Département de Pro-
priété Intellectuelle
F-06610 La Gaude(FR)**

## Description

This invention relates generally to help facilities, and more specifically to placement of called help on a screen.

Within the market place there exist many applications having windowing capabilities for handling split screens, audit windows, moveable bordered viewports, etc. With these applications, a window occupies a portion of a display screen of a keyboard/display standalone or host connected computer system. The remainder of the screen can be dedicated to other chores, documents, etc.

Prior art help is information that can be presented in a window on the same screen from which help is called. When an operator or user needs assistance, a help or equivalent key is depressed and help information is displayed. However, when help is displayed on the same screen, it is positioned at a dedicated location. This often results in pertinent information being blocked from view. This alone can restrict a user's dialog with the system.

Also, available in the help area is relational contextual help. A call for help when operating within an AGE field, for example, will result in help being displayed related to the AGE field. In fact, displayed help can carry a heading AGE as a reference which can be used to correlate the help information and the field. Such a prior art is disclosed in EP-A-118187.

With the above prior art in mind, the instant invention is concerned with displaying called help in a window on the same screen where help is required, and in a manner to least interfere with the other information on the screen. More specifically, the instant invention is to position the window adjacent an operating point at which help is called and to display help information in the window related to the point.

In this sense, contextual help is provided which is both relational and positional. Further, a blank area of the screen adjacent the operating point is sought for positioning the help window. This is to avoid blocking pertinent information from view during a display of help. By not blocking pertinent information, a user dialog with the system can be continued.

From the above, the prior art is pertinent to varying degrees, but falls short of either anticipating the instant invention, or rendering the instant invention obvious. The advantages of the instant invention are that help is displayed on the same screen with a job, and as close to the operating point as feasible. This advantage results in more meaningful help, less confusion, and a friendlier user interface.

The most pertinent prior art is EP-A-171663 (which is a prior art document according to Article 54(3) and (4)) which relates to a help technique in which a data entry system responds to a user request for help by overwriting a portion of the screen with explanatory text that relates to the field the user is currently entering. The explanatory text may overlay other fields on the screen but leaves the related field area in view. The explanatory text is highlighted and linked to the data entry field.

A unique method of, and system for, helping a user is provided such that user friendliness is improved and confusion is reduced. When help is called, a blank area on a display screen adjacent to the field containing an operating point is sought. A determination is made as to whether a minimum amount of meaningful help can be displayed in this blank area. If so, sufficient help information to fill the blank area is windowed and displayed in the blank area. If the blank area is of insufficient size to carry a minimum amount of meaningful help information, a minimum amount of meaningful help information is windowed and displayed on the screen adjacent the operating point. If additional help information is needed, the user can call for scrolling or an increase in the size of the window. If the window is covering up needed information, the user can call for either decreasing the size of the window, or move the window to a more convenient position on the screen. More particularly, the object of the invention is to provide a method as defined in claim 1. Further embodiments of the method are defined in the appended dependant claims.

Brief Description of the Drawing

Fig. 1 is a pictorial representation of a display screen grid made up of quadrants.

Fig. 2 is a pictorial representation of a filled- in display screen with help displayed in a window in one of the quadrants.

Fig. 3 is a pictorial representation of a screen containing a windowed menu and help displayed on a window in an unused portion of the screen.

Fig. 4 is another pictorial representation of a screen containing a windowed menu with help displayed in a window overlaying a portion of the menu.

Fig. 5 is a flow chart illustrating user and system operations for causing help to be provided in a user friendly manner.

2

Best Mode for Carrying Out the Invention

In using a keyboard/display standalone or host connected computer system, there are often instances where a user needs assistance. Assistance is conveniently provided on the display screen, when called, in terms of help or help information. This information can be a definition of an item, guidance in terms of the next user operation to be performed, where to seek additional information, etc. For example, if a) a menu is presented to a user, b) one of the options is "margins", and c) this term is not totally understood, help can be called for a definition. Help, if displayed on a separate screen, can present a problem in that help may have to be called to get back to the original screen. If displayed on the same screen, pertinent information may be covered up.

Although a user has traditionally been a programmer, and an operator one who uses an application program written by a user, the two can be considered synonymous for purposes of this application. Both require help from time to time. This is so even though the help information may be differently tailored or worded. Since this invention deals with how help is presented as opposed to how it is tailored, no need exists for distinguishing between a user and an operator.

Help according to this invention is provided within a window on the face of a cathode ray tube (CRT) display included in the system. A screen for purposes of this application is information being displayed at any particular time on the face of the CRT. It is to be considered the same screen when help information is windowed and displayed with the information. The window will occupy a portion of the screen and for purposes of distinguishing the information in the window from the remainder of the information on the screen, the window will be bordered.

For purposes of this application, a field will occupy a portion of the screen and contain related information. When a text paragraph covers the entire screen, the field is equal to the screen. When the field is a column for AGE, the field will be defined by the column width and length.

In many instances, whether operation is textual, columnar, etc., there will be blank space on the screen. This blank space represents an unused portion of the screen which may be filled in with help when called. With the information on the screen formatted, the largest block of blank space adjacent the operating point is sought. If it is large enough to contain a minimum amount of meaningful help, help is displayed in this blank space. This is so irrespective of whether the blank space is within or without the field. Of course, if the blank space is large enough to contain more than a minimum amount or help, the blank space can be filled with help. If there is insufficient blank space for help, then a portion of the field is overlayed with a minimum amount of help adjacent the operating point. If additional help information is then needed, the help window can be enlarged, or help information scrolled within the help window. The result of enlarging the help window will be less of the field available for viewing. If information already on the screen has been overlayed with help and the overlayed information is needed, the window can either be diminished in size or moved. The sizing of a window in terms of increasing and decreasing its size, and the scrolling of information within a window are covered in US patent publication US-A-4658955, filed April 30, 1984, and entitled Window View Control.

With the above placement, sizing, etc., of help, the object is to leave viewable as much as practicable of the field containing the operating point.

The operating point is usually the position of a cursor which may be addressing a line, character, column, etc. If there is stored help related to the cursor position, then a call for help will result in this help being called. It is to be noted that if there is no stored help for a cursored word, for example, then a determination is made as to whether there is stored help for the field containing the cursor. If so, this help is displayed. Also, the stored help will be labelled, and when displayed, the labelling will be used as a heading for the window. For example, a call for help when operating on a Margins row on a selection menu can result in a display of a help window with a Margins heading.

Described in the preceding paragraph is contextual help in a traditional or relational sense. This traditional help also forms part of this invention.

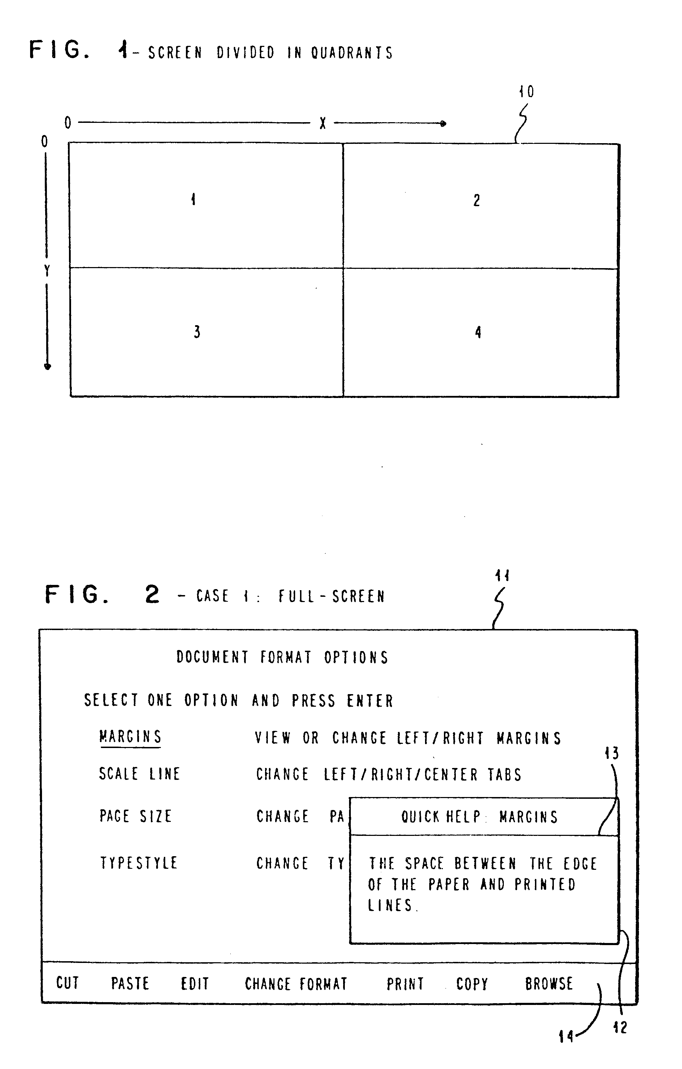

For a more detailed understanding of the invention, reference is first made to Fig. 1. In this figure is shown a display screen grid 10 made up of quadrants. The denominator used to divide the screen and the vertical and horizontal divisions obtained are convenient for a 25 line by 80 character display. For larger displays, a different denominator and only horizontal divisions may prove ideal. For smaller screens, a single vertical division may meet most needs. The reason for the grid is that it facilitates location of blank areas on a screen for placement of help information.

Refer next to Fig. 2. In this figure is shown a full screen display of a selection menu screen 11. On the menu are a number of options such as MARGINS, SCALE LINE, etc. Selection of one of these options is by cursoring a choice and then depressing an ENTER key on the keyboard (not shown) included in the system. For purposes of this application, the cursor is an underline such as line 20 shown below MARGINS. Cursoring down one line will cause the underline to be displayed under SCALE LINE.

Selection of MARGINS upon depressing the ENTER key will cause another screen to be displayed. On this other screen will be the left and right margins for the job to be, or being, performed. These margins may be presented as marks on a scale line, vertical lines extending down the screen, etc.

With the underline under MARGINS, depression of a HELP, or equivalent function key on the keyboard will result in help being displayed.

For help to be displayed, a quadrant from Fig. 1 is sought having sufficient blank space to position a minimum amount of meaningful help. Since no such quadrant exists, a minimum amount of meaningful help is written into and over a portion of the information in the 4th quadrant. The reason this quadrant is selected rather than the 3rd quadrant is that help was called while MARGINS was cursored. MARGINS forms part of an option field with related information. SCALE LINE, PAGE SIZE and TYPESTYLE are the other parts of the option field. It is desirable not to have related information overlayed or covered up with help. The reason help is not written into the second quadrant is that this quadrant also contains information related to MARGINS. This information is the wording "view or change left/right margins."

By positioning help in the 4th quadrant, all remaining options, such as PAGE SIZE, are still available for cursoring and calling help.

Help which is displayed in the 4th quadrant is windowed information. That is, a window is created in screen 11 of sufficient size to contain the help information within border 12. Border 12 is used to distinguish help from the remainder of the information on screen 11. Also, a heading Margins is provided to tie help to MARGINS in the option field. This provides for a visual check as to whether desired help is being displayed. Below the heading Margins is a separator line 13 and below line 13 is a definition of margins.

In the preferred embodiment, the command line 14 is not to be covered up with help.

From the above, when help is called, it is displayed in an available blank area on the screen. If no such area exists, or is of insufficient size to house help, help is written over existing information which is not related to the operating point, but as close as possible to the operating point. The operating point in the above is the underline under MARGINS.

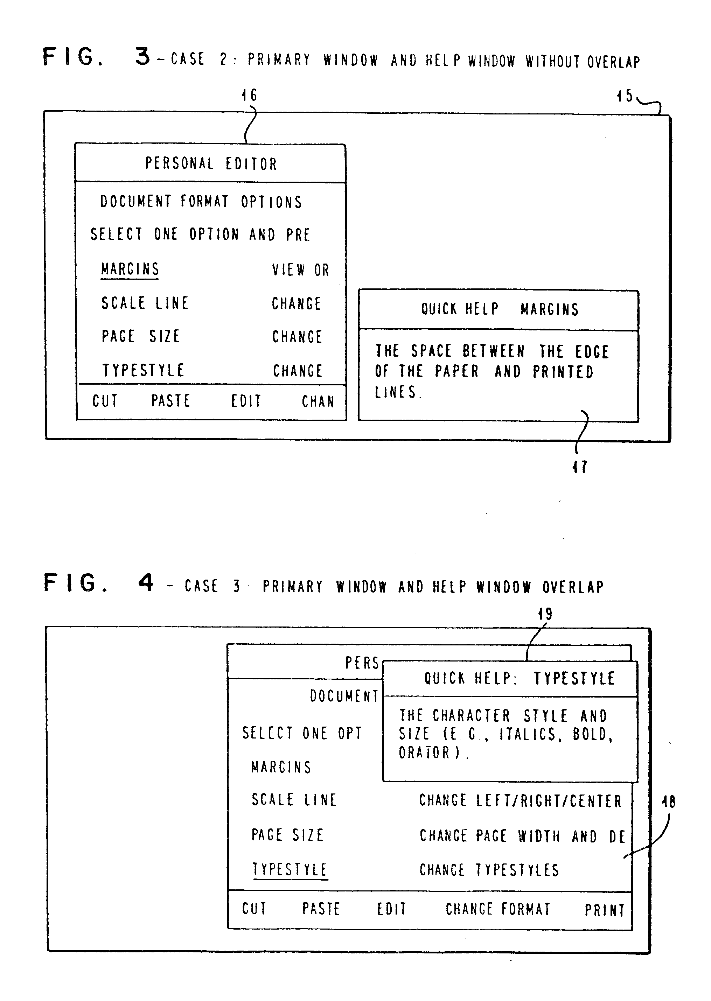

Referring next to Fig. 3, there is shown a screen 15. On screen 15 are windowed options of selection menu 16, and windowed help 17 occasioned by the calling of help while cursoring MARGINS. One result of windowing menu 16 as shown is that the screen is vertically divided leaving the right half available for help 17. This is a particularly attractive embodiment in that much more room is available for help information. Also, as windowed, the option field is left intact.

Refer next to Fig. 4. Again, an option menu 18 has been windowed. When help is called, there must be some overlap of menu 18. This is since there is insufficient room for help 19 without an overlap. The least overlap for cursored TYPESTYLE will result if help is positioned in the second quadrant.

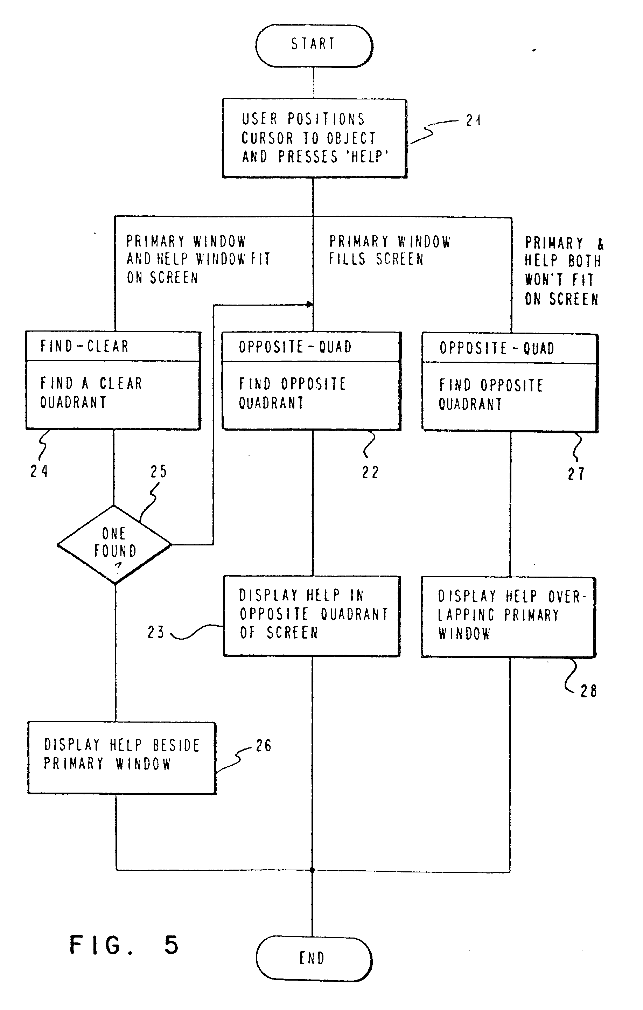

Reference is next made to the following illustration of a routine or application program in conjunction with the flow chart of Fig. 5. The flow chart illustrates operator and system operations for causing help to be placed on a screen in the most helpful, but unobstructive manner. The routine is useable by a processor included in the system for placing help on the screen when called. This routine is in program design language from which source and machine code are derivable.

```
PROCEDURE POSITION_WINDOW (PRI_WIDTH, PRI_HEIGHT,
        HELP_WIDTH, HELP_HEIGHT, OBJ_LOC_X,
        OBJ_LOC_Y, HELP_LOC_X, HELP_LOC_Y)


CASE
1:PRI_WIDTH=SCREEN_WIDTH
    CALL OPPOSITE_QUAD (OBJ_LOC_X, OBJ_LOC_Y)
      --Fig. 2 - Case 1--
      --Help will be located in quadrant opposite to
        that which object is in - see procedure
        OPPOSITE_QUAD below--



2:PRI_WIDTH + HELP_WIDTH < SCREEN_WIDTH
    BEGIN
      CALL FIND_CLEAR (CLEAR_QUAD)
        CASE
        1:CLEAR_QUAD=0
            CALL OPPOSITE_QUAD (OBJ_LOC_X, OBJ_LOC_Y)
              --Fig. 4 - Case 3--
              --Find a quadrant clear of option
                column and other windows.
                If no clear quadrants, Help
                will be located in quadrant opposite
                to that which object is in - see
                procedure OPPOSITE_QUAD below--



        2:CLEAR_QUAD=1
            HELP_LOC_X=SCREEN_LEFT + 1
            HELP_LOC_Y=SCREEN_TOP + 1
            --Help will be in quadrant 1--
        3:CLEAR_QUAD=2
            HELP_LOC_X=SCREEN_RIGHT - HELP_WIDTH
            HELP_LOC_Y=SCREEN_TOP + 1
            --Help will be in quadrant 2--
        4:CLEAR_QUAD=3
            "
```

```
                        --Help will be in quadrant 3--
                5:CLEAR_QUAD=4
                    "

                    "

                --Fig. 3 - Case 2--
                --Help will be in quadrant 4--
            ENDCASE
        END
    OTHERWISE
        BEGIN
            CALL OPPOSITE_QUAD (OBJ_LOC_X, OBJ_LOC_Y)
                --Fig. 4 - Case 3--
                --Help will be located in quadrant opposite to
                    that which object is in - see procedure
                    OPPOSITE_QUAD below--


        END
    ENDCASE
    PROCEDURE OPPOSITE_QUAD (OBJ_LOC_X, OBJ_LOC_Y)
        --Locate Help window in the quadrant opposite to
            that in which the object of the Help is located--

        BEGIN
            CALL QUADRANT (OBJ_LOC_X, OBJ_LOC_Y, QUADRANT)
                CASE
                    --Object Location--
                1:QUADRANT=1
                    BEGIN
                        --Help will be in quadrant 4--
                        HELP_LOC_X=SCREEN_RIGHT - HELP_WIDTH
                        HELP_LOC_Y=SCREEN_BOTTOM - HELP_HEIGHT
                    END
                2:QUADRANT=2
                    BEGIN
                        --Help will be in quadrant 3--
                        HELP_LOC_X=SCREEN_LEFT+1
                        HELP_LOC_Y=SCREEN_BOTTOM - HELP_HEIGHT
```

```
          END

          3:QUADRANT=3

                   --Help will be in quadrant 2--
                   "

                   "

          4:QUADRANT=4

                   --Help will be in quadrant 1--
                   "

                   "

          ENDCASE

     END
```

Refer next specifically to Fig. 5. First, a user positions a cursor, such as underline 20 in Fig. 2, under an item or object about which information or help is desired. A help key is then depressed. This is depicted by block 21.

Three cases are to be considered for location of the help window. The first is illustrated in Fig. 2 wherein the screen is already filled. In this case, an opposite quadrant is sought as indicated by block 22. Help is then displayed in this opposite quadrant as indicated by block 23. The corresponding line in the above program design language is CALL OPPOSITE__QUAD.

The second is illustrated in Fig. 3 wherein the menu and help window will both fit on the screen at the same time. A clear quadrant opposite the point help is needed is sought as indicated by block 24. When found by decision block 25, help is displayed as indicated by block 26. It is irrelevant which of the clear quadrants help is displayed in. With this being the case, the opposite quadrant is chosen by default. The corresponding line in the above program design language is CALL FIND__CLEAR. If a clear quadrant is not found by decision block 25, the operations of blocks 22 and 23 are performed and help is displayed in an opposite quadrant. The corresponding line in the above program design language is CALL OPPOSITE__QUAD.

The third case is illustrated in Fig. 4 wherein there is insufficient room for help to be displayed even though there are blank areas on the screen in quadrants 1 and 3. Here a quadrant opposite the quadrant in which help is requested is sought as indicated by block 27. Help is then displayed in a partially overlapping manner as indicated by block 28. The corresponding line in the above program design language is CALL OPPOSITE__QUAD.

In summary, a unique method of, and system for, helping a user is provided such that user friendliness is improved and confusion is reduced. When help is called, a blank area on a display screen adjacent an operating point is sought. A determination is made as to whether a minimum amount of meaningful help can be displayed in this blank area. If so, sufficient help information to fill the blank area is windowed and displayed in the blank area. If the blank area is of insufficient size to carry a minimum amount of meaningful help information, a minimum amount of meaningful help information is windowed and displayed on the screen adjacent the operating point. If additional help information is needed, the user can call for scrolling or an increase in the size of the window. If the window is covering up needed information, the user can call for either decreasing the size of the window, or move the window to a more convenient position on the screen.

## Claims

1.  A method for providing help information on a screen to a user of a keyboard/display computer system, said screen being information displayed on display means, said method comprising the steps of:

    placing the operating point, that is defined by the cursor, on the field for which help is requested, said field occupying a portion of the screen and containing related information; and

    calling a help routine stored within said computer when the user activates a help key;

said method being characterized by the steps of;

searching for an unused portion of the displayed screen adjacent to the field containing the current operating point;

determining if said unused portion could contain a minimum amount of meaningful help text;

creating in response to said steps of searching and determining wherein said unused portion was found, a window on said screen within said unused portion or wherein said unused portion was not found, a window at a position on said screen such that a maximum amount of the field containing said operating point remains viewable on said screen;

displaying help text in said window.

2. A method according to Claim 1 including the step of sizing said window in order for as much of said field as practicable to remain viewable, if the blank space of said window is not large enough to contain all the help text.

3. A method according to Claim 1 or 2 including the step of sizing said window to fit within said unused portion.

4. A method according to Claim 1 including the step of displaying a reference to said operating point within said window.

5. A method according to Claim 1 including the step of displaying help appropriate to an operation being performed at said operating point.

6. A method according to Claim 1 including the step of scrolling help text if additional help text is needed.

7. A method according to Claim 1 including the step of enlarging said window if additional help text is needed.

8. A method according to claim 1 or 2 including the step of decreasing the size of said window if said information of the field has been overlayed with said window and this overlayed information is needed.

**Revendications**

1. Procédé pour fournir des informations d'aide (help) sur un écran à un utilisateur d'un système ordinateur clavier/écran d'affichage, les informations dudit écran étant affichées sur un moyen d'affichage, ledit procédé comprenant les étapes de:
   placer le point d'opération, qui est défini par le curseur, sur le champ pour lequel de l'aide est demandée, ledit champ occupant une portion de l'écran et contenant des informations connexes; et
   appeler un sous-programme d'aide emmagasiné dans ledit ordinateur lorsque l'utilisateur actionne un touche d'aide;
   ledit procédé étant caractérisé par les étapes de:
   rechercher une portion inutilisée de l'écran affiché adjacent au champ contenant le point d'opération en cours;
   déterminer si ladite portion inutilisée pourrait contenir une quantité minimale du texte d'aide constructive;
   créer, en réponse auxdites étapes de recherche et de détermination dans lesquelles ladite portion inutilisée a été trouvée, une fenêtre sur ledit écran dans ladite portion inutilisée ou, dans lesquelles ladite portion inutilisée n'a pas été trouvée, une fenêtre à une position sur ledit écran de sorte qu'une quantité maximale du champ contenant ledit point d'opération reste visualisable sur ledit écran;
   afficher le texte d'aide dans ladite fenêtre.

2. Procédé selon la revendication 1, comprenant les étapes d'ajuster ladite fenêtre de sorte que puisse être visualisable autant dudit champ que possible, si l'espace blanc de ladite fenêtre n'est pas suffisamment grand pour contenir tout le texte d'aide.

3. Procédé selon les revendications 1 ou 2, comprenant l'étape d'ajuster ladite fenêtre pour qu'elle se tienne dans ladite portion inutilisée.

4. Procédé selon la revendication 1, comprenant l'étape d'afficher une référence audit point d'opération dans ladite fenêtre.

5. Procédé selon la revendication 1, comprenant l'étape d'afficher l'aide appropriée à une opération alors accomplie audit point d'opération.

6. Procédé selon la revendication 1, comprenant l'étape de faire défiler le texte d'aide si un texte d'aide supplémentaire est nécessaire.

7. Procédé selon la revendication 1, comprenant l'étape d'agrandir ladite fenêtre si un texte d'aide supplémentaire est nécessaire.

8. Procédé selon les revendications 1 ou 2, comprenant l'étape de diminuer la taille de la fenêtre si ladite information du champ a été couverte par la ladite fenêtre et si cette information recouverte est nécessaire.

**Patentansprüche**

1. Verfahren zum Liefern von Hilfsinformationen auf einer Anzeige einem Benutzer eines Tastatur/Anzeige-Rechnersystems, wobei die Anzeige eine Information darstellt, die auf Anzeigemitteln angezeigt ist und das Verfahren die folgenden Schritte umfaßt:

   Einstellen des von dem Cursor definierten Arbeitspunktes auf dem Feld, für das eine Hilfe gefordert wird, wobei das Feld einen Teil der Anzeige besetzt und entsprechende Informationen enthält und

   Abrufen einer Hilfe-Routine, die innerhalb des Rechners gespeichert ist, wenn der Benutzer eine Hilfe-Taste betätigt,

   wobei das Verfahren durch die folgenden Schritte gekennzeichnet ist:

   Suchen eines unbenutzten Teils der angezeigten Anzeige, der zu dem den aktuellen Arbeitspunkt enthaltenden Feld benachbart ist,

   Bestimmen, ob der unbenutzte Teil eine minimale Menge eines sinnvollen Hilfe-Textes enthalten könnte,

   Schaffen eines Fensters entsprechend den Schritten des Suchens und Bestimmens, bei welchen der unbenutzte Teil gefunden wurde, auf der Anzeige innerhalb des unbenutzten Teiles oder bei welchen der unbenutzte Teil nicht gefunden wurde, eines Fensters bei einer Position auf der Anzeige so, daß eine maximale Menge des den Arbeitspunkt enthaltenden Feldes auf der Anzeige sichtbar bleibt,

   Anzeigen eines Hilfe-Textes in dem Fenster.

2. Verfahren nach Anspruch 1, welches den folgenden Schritt umfaßt: Bemessen des Fensters so, daß so viel wie möglich des Feldes sichtbar bleibt, falls der leere Bereich des Fensters nicht genügend groß ist, um den ganzen Hilfe-Text zu enthalten.

3. Verfahren nach Anspruch 1 oder 2, welches den Schritt umfaßt, daß das Fenster bemessen wird, um in den unbenutzten Teil hineinzupassen.

4. Verfahren nach Anspruch 1, welches den Schritt des Anzeigens eines Bezugs zu dem Arbeitspunkt innerhalb des Fensters umfaßt.

**5.** Verfahren nach Anspruch 1, welches den Schritt des Anzeigens einer Hilfe umfaßt, die zu einem Arbeitsgang passend ist, der an dem Arbeitspunkt durchgeführt wird.

**6.** Verfahren nach Anspruch 1, welches, falls ein zusätzlicher Hilfe-Text benötigt wird, den Schritt des Rollens eines Hilfe-Textes umfaßt.

**7.** Verfahren nach Anspruch 1, welches den Schritt des Vergrößerns des Fensters umfaßt, falls ein zusätzlicher Hilfe-Text benötigt wird.

**8.** Verfahren nach Anspruch 1 oder 2, welches den Schritt des Verringerns der Größe des Fensters umfaßt, falls die Informationen des Feldes mit dem Fenster überdeckt wurden und diese überdeckten Informationen benötigt werden.

# FIG. 1 – SCREEN DIVIDED IN QUADRANTS

0 ——————— X ————→

10

| | |
|---|---|
| 1 | 2 |
| 3 | 4 |

# FIG. 2 – CASE 1: FULL-SCREEN

11

DOCUMENT FORMAT OPTIONS

SELECT ONE OPTION AND PRESS ENTER

MARGINS          VIEW OR CHANGE LEFT/RIGHT MARGINS

SCALE LINE       CHANGE LEFT/RIGHT/CENTER TABS

13

PAGE SIZE        CHANGE  PA | QUICK HELP: MARGINS

TYPESTYLE        CHANGE  TY | THE SPACE BETWEEN THE EDGE
                             OF THE PAPER AND PRINTED
                             LINES.

CUT    PASTE    EDIT    CHANGE FORMAT    PRINT    COPY    BROWSE

14      12

FIG. 3 – CASE 2: PRIMARY WINDOW AND HELP WINDOW WITHOUT OVERLAP

```
┌─────────────────────────────────────────────────────────────────┐
│  16                                                        15     │
│  ┌─────────────────────────────┐                                 │
│  │      PERSONAL EDITOR         │                                 │
│  ├─────────────────────────────┤                                 │
│  │  DOCUMENT FORMAT OPTIONS     │                                 │
│  │  SELECT ONE OPTION AND PRE   │                                 │
│  │  MARGINS            VIEW OR  │  ┌──────────────────────────┐   │
│  │  SCALE LINE         CHANGE   │  │  QUICK HELP   MARGINS     │   │
│  │  PAGE SIZE          CHANGE   │  ├──────────────────────────┤   │
│  │  TYPESTYLE          CHANGE   │  │  THE SPACE BETWEEN THE EDGE│  │
│  ├─────────────────────────────┤  │  OF THE PAPER AND PRINTED │   │
│  │  CUT   PASTE   EDIT   CHAN   │  │  LINES.                   │   │
│  └─────────────────────────────┘  └──────────────────────────┘   │
│                                                    17            │
└─────────────────────────────────────────────────────────────────┘
```

FIG. 4 – CASE 3: PRIMARY WINDOW AND HELP WINDOW OVERLAP

```
┌─────────────────────────────────────────────────────────────────┐
│                                              19                   │
│          ┌──────────────────────────────────────────────┐        │
│          │  PERS┌──────────────────────────────┐         │        │
│          │      │  QUICK HELP: TYPESTYLE        │         │       │
│          │ DOCUMENT──────────────────────────── │         │       │
│          │      │  THE CHARACTER STYLE AND       │        │       │
│          │SELECT ONE OPT│ SIZE (E.G., ITALICS, BOLD,│     │       │
│          │      │  ORATOR).                      │        │       │
│          │ MARGINS└──────────────────────────────┘        │   48  │
│          │ SCALE LINE          CHANGE LEFT/RIGHT/CENTER   │       │
│          │ PAGE SIZE           CHANGE PAGE WIDTH AND DE   │       │
│          │ TYPESTYLE           CHANGE TYPESTYLES          │       │
│          ├────────────────────────────────────────────── │       │
│          │ CUT   PASTE   EDIT   CHANGE FORMAT   PRINT     │       │
│          └──────────────────────────────────────────────┘        │
└─────────────────────────────────────────────────────────────────┘
```

FIG. 5